# EUROPÄISCHE PATENTSCHRIFT

(11) **EP 0 611 346 B1**
(45) Veröffentlichungstag und Bekanntmachung des Hinweises auf die Patenterteilung: **03.01.1996**
(21) Anmeldenummer: 92923410.2
(22) Anmeldetag: 12.11.1992
(51) Int. Cl.: B60R 21/08, B60R 21/22

(54) **SICHERHEITSVORRICHTUNG**
SAFETY DEVICE
DISPOSITIF DE SECURITE

(30) Priorität: 15.11.1991 DE 4137749
(43) Veröffentlichungstag der Anmeldung: 24.08.1994
(73) Patentinhaber: KOLBENSCHMIDT Aktiengesellschaft, D-74150 Neckarsulm (DE); Dynamit Nobel Aktiengesellschaft, D-53839 Troisdorf (DE); SIEMENS AKTIENGESELLSCHAFT, D-80333 München (DE)
(72) Erfinder: KRAFT, Josef, D-8438 Berg (DE); REULEIN, Hermann, D-4040 Neuss 21 (DE); FRANZ, Joachim, D-8401 Thalmassing (DE); KREUZER, Martin, D-8751 Kleinwallstadt (DE)
(74) Vertreter: Rieger, Harald, Dr.
(86) Internationale Anmeldenummer: EP9202635
(87) Internationale Veröffentlichungsnummer: WO9309977

(56) Entgegenhaltungen:
- DE-A- 3 632 877
- FR-A- 2 122 189
- GB-A- 962 946
- US-A- 2 477 933
- US-A- 3 795 412

## Beschreibung

Die Erfindung betrifft eine Sicherheitsvorrichtung zum Schutz der Insassen eines Fahrzeugs, vorzugsweise Personenkraftwagens, bei einem Seitenaufprall, bestehend aus einem im Seitenbereich des Fahrzeugs integrierten, bei einem Seitenaufprall mit Hilfe eines automatisch auslösbaren Antriebs mittels eines Zugmittels fest vor die Innenseite der Fensteröffnung des Seitenbereichs spannbaren Rückhaltemittel.

Bei einem Seitenaufprall eines Fahrzeugs, eine Unfallart, die etwa 35 % aller Unfallarten darstellt, auf ein massives Hindernis erfolgt eine starke rotatorische Seitwärtsbewegung des Kopfes des Fahrzeuginsassens gegen die Stoßrichtung des Seitenaufpralls. Durch einen Aufschlag des Kopfes des ungeschützten Fahrzeuginsassens auf den Seitenbereich des Fahrzeugs, insbesondere auf die Scheiben, können erhebliche Schädelverletzungen entstehen. Eine Verletzung der Halswirbelsäule des Fahrzeuginsassens kann dann eintreten, wenn durch den Seitenaufprall die Seitenscheiben zerstört ist und infolge der rotatorischen Seitwärtsbewegung des Kopfes dieser durch die scheibenlose Fensteröffnung nach außen geschleudert wird. Um das Risiko solcher Unfallverletzungen deutlich zu reduzieren und damit die passive Sicherheit zu erhöhen, ist in der DE-A-2 249 988 im Kopfbereich eines Fahrzeuginsassens eine im seitlichen Dachrahmen angeordnete Gassack-Aufprall-Schutzeinheit vorgesehen, deren Gassack im aufgeblasenen Zustand zwischen dem Kopf des Fahrzeuginsassens und dem Seitenbereich des Fahrzeugs zu liegen kommt. In der DE-C-3 422 263 ist eine Sicherheitseinrichtung zum Schutz von Fahrzeuginsassen gegen einen Seitenaufprall beschrieben, wobei über die Deformation der Karosserie ein im Seitenbereich des Fahrzeugs angeordneter volumenveränderbarer Gasgenerator einen im seitlichen Dachholm befindlichen Gassack aufbläst. Die GB-A-2 220 620 zeigt eine in der Tür eines Fahrzeugs untergebrachte Gassack-Aufprall-Schutzeinheit. Im Falle eines Seitenaufpralls soll sich der aufblasende Gassack zwischen den Fahrzeuginsassen und die Seitenwand des Fahrzeugs schieben. Gemäß der DE-A-3 741 637 ist zum Schutz gegen einen Seitenaufprall des Fahrzeugs in der Rückenlehne des Sitzes in dem die Schultern des Fahrzeuginsassens abstützenden Bereich wenigstens eine nach vorn vorspringende Seitenwange angeordnet, in der ein aufblasbarer Gassack untergebracht ist. Hinzuweisen ist schließlich auf die DE-A-4 018 470, die eine Sicherheitsvorrichtung gegen einen Seitenaufprall eines Fahrzeugs zeigt, wobei im seitlichen Teil der Rückenlehnen der Fahrzeugsitze eine Gassack-Aufprall-Schutzeinheit angeordnet ist, die sich zwischen den Fahrzeuginsassen und den Seitenbereich des Fahrzeugs schiebt. In der FR-A-2 122 189 ist ein durch ein Netz gebildetes Insassen-Rückhaltesystem für Motorfahrzeuge beschrieben. Das Netz wird im Falle eines Aufpralls vor die Öffnungen der Karosserie gespannt. Dabei ist vorgesehen, daß ein aufblasbares Kissen beim Aufblasen die das Netz tragenden Kabel entlang einer vorbestimmten Strecke spannt.

Die starke rotatorische Seitwärtsbewegung des Kopfes des Fahrzeuginsassens wird durch den aufgeblasenen Gassack einer im Seitenbereich des Fahrzeugs untergebrachten Gassack-Aufprall-Schutzeinheit unzureichend verhindert werden, wenn beim Seitenaufprall des Fahrzeugs die Seitenscheiben zerstört werden und der aufgeblasene Gassack durch die Fensteröffnung aus dem Fahrzeuginneren nach außen tritt. Infolge der dann fehlenden Gegenkraft wird der angestrebte Energieumsatz im Gassack nicht erreicht.

Es ist die Aufgabe der vorliegenden Erfindung, eine Sicherheitsvorrichtung zum Schutz des Insassens eines Fahrzeugs bei einem Seitenaufprall zu schaffen, die die rotatorische Seitwärtsbewegung des Kopfes des Fahrzeuginsassens im Falle der Zerstörung der Seitenscheiben des Fahrzeugs begrenzt und gleichzeitig den Kopf weich und ohne große Rückprallkräfte auffängt.

Die Lösung dieser Aufgabe besteht aus einer Sicherheitsvorrichtung mit den Merkmalen des Anspruchs 1. Sie ist eine Kombination des eingangs beschriebenen Rückhaltemittels mit einer im Seitenbereich des Fahrzeugs integrierten Gassack-Aufprall-Schutzeinheit, deren Gassack im aufgeblasenen Zustand zwischen dem vor die Fensteröffnung gespannten Rückhaltemittel und dem Fahrzeuginsassen liegt, nachdem in der ersten Phase nach dem Seitenaufprall zunächst das Rückhaltemittel straff vor die Innenseite der Fensteröffnung der Fahrzeugtür gespannt wurde. Auf diese Weise wird verhindert, daß der Gassack beim Aufschlagen des Kopfes infolge der rotatorischen Seitwärtsbewegung durch die scheibenlose Fensteröffnung der Tür aus dem Fahrzeug nach außen gedrückt wird und damit seine Schutzfunktion nicht mehr gewährleistet ist.

Im Rahmen der Ausgestaltung der Erfindung besteht das Rückhaltemittel aus einem flächigen, im nichtaktivierten Zustand zusammengefalteten und verstauten Textilgut, insbesondere einem Gewebe, Gestrick, Geflecht oder Netz.

Um ein sicheres Spannen des Rückhaltemittels vor der Fensteröffnung zu gewährleisten, ist das Zugmittel geführt und nach Erreichen des aktivierten Zustands des Rückhaltemittels fixierbar.

Die weitere Ausbildung der erfindungsgemäßen Sicherheitsvorrichtung besteht darin, daß der Antrieb aus einem vorgespannten Federelement besteht.

Vorzugsweise wird als Antrieb eine mit einem Fluid beaufschlagbare Kolben-Zylinder-Einheit verwendet, die mit einem mit Druckluft oder mit einem durch Initialzündung zu zündenden Festtreibstoffsatz gefüllten Gasgenerator verbunden ist.

Zweckmäßigerweise sind der Antrieb, das Zugmittel und das Rückhaltemittel in den Bauteilen des Türrahmens untergebracht. Es ist jedoch auch möglich, den Antrieb, das Zugmittel und/oder das Rückhaltemittel in den dem Türrahmen benachbarten Bereichen der Karosseriekonstruktion des Fahrzeugs unterzubringen.

Je nach Anordnung des Stauraums für das zusammengefaltete Rückhaltemittel kann dieses von hinten nach vorn, von vorn nach hinten, von oben nach unten, von unten nach oben oder in diagonaler Richtung vor die Innenseite der Fensteröffnungen der Seitenbereiche des Fahrzeugs gespannt werden.

Eine optimale Schutzwirkung wird dann erreicht, wenn erfindungsgemäß der Gassack der Gassack-Aufprall-Schutzeinheit und das Rückhaltemittel bzw. Zugmittel so miteinander verbunden sind, daß bei einem Seitenaufprall der Gassack zusammen mit dem Rückhaltemittel zunächst flächig aufgespannt und anschließend aufgeblasen wird.

Die Gassack-Aufprall-Schutzeinheit wird zweckmäßigerweise in der Tür untergebracht. Es besteht aber auch die Möglichkeit einer Anordnung in den Bereichen des Bodenholms, des Dachholms, der Türholme, insbesondere des mittleren Holms, des sogenannten B-Holms, oder auch in dem dem Dachholm benachbarten Bereich des Dachs der Karosseriekonstruktion des Fahrzeugs.

Die Erfindung ist in den Zeichnungen beispielhaft dargestellt und wird nachfolgend näher erläutert. Es zeigen:

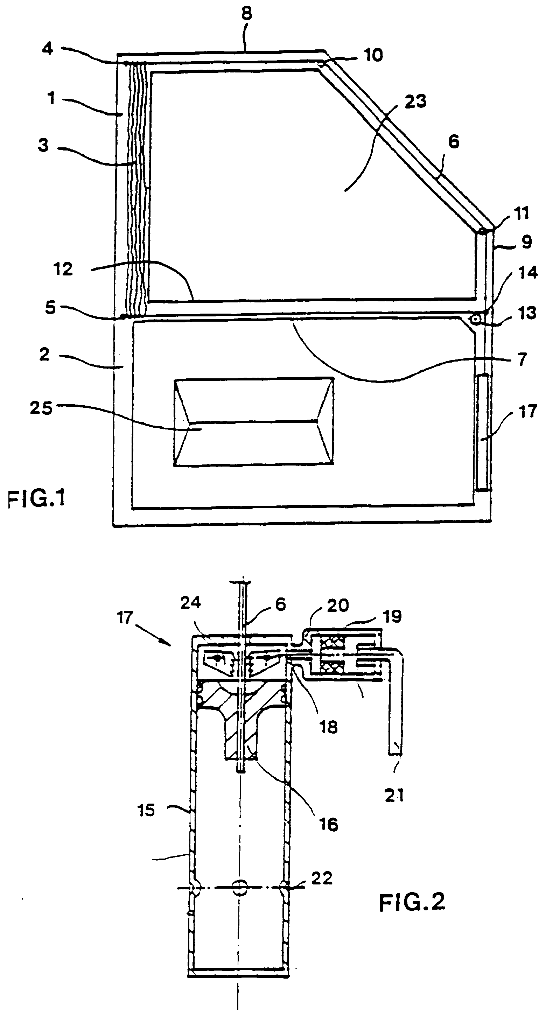

- Fig. 1: einen Längsschnitt durch eine Tür eines Personenkraftwagens mit in den Bauteilen des Türrahmens untergebrachter Sicherheitsvorrichtung,
- Fig. 2: einen Längsschnitt durch die als Antrieb für das Rückhaltemittel benutzte Kolben-Zylinder-Einheit,
- Fig. 3: einen Längsschnitt durch die Tür eines Personenkraftwagens gemäß Fig. 1 mit aktivierter Sicherheitsvorrichtung,
- Fig. 4: einen Querschnitt durch die Tür eines Personenkraftwagens mit aktivierter Sicherheitsvorrichtung und
- Fig. 5: einen Längsschnitt durch die Tür eines Personenkraftwagens mit aktivierter Sicherheitsvorrichtung.

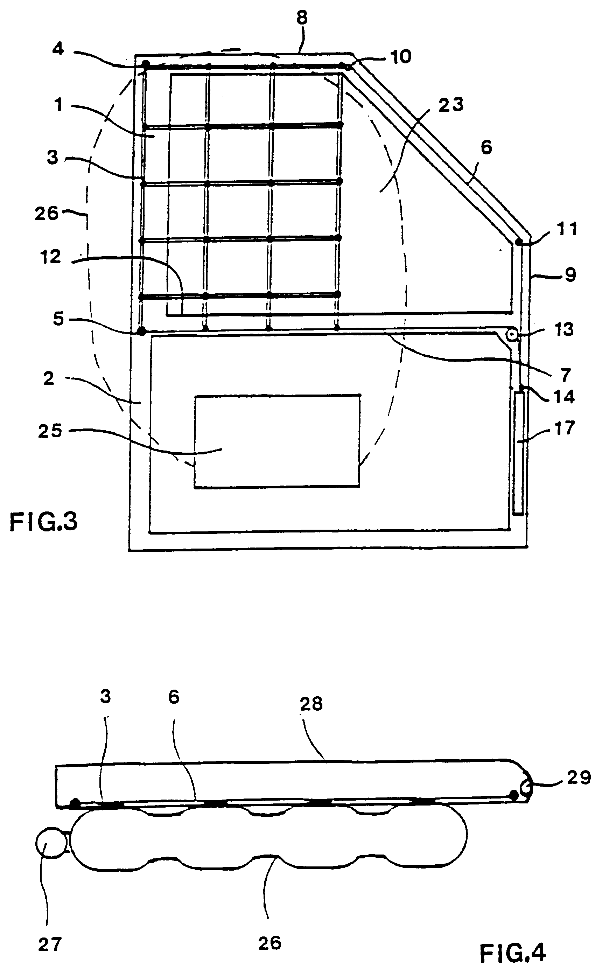

Im oberen Abschnitt (1) des dem B-Holm der nicht dargestellten Karosseriekonstruktion des Fahrzeugs benachbarten Teils des Türrahmens (2) ist ein zusammengefaltetes, im Falle eines Seitenaufpralls als Rückhaltemittel dienendes Netz (3) untergebracht und im Bereich seiner oberen und unteren, dem B-Holm nächstliegenden Ecken durch die Halterungen (4, 5) am Türrahmen (2) befestigt. Die anderen Ecken des Netzes sind an den Zugseilen (6, 7) befestigt. An das im dachseitigen und frontseitigen Abschnitt (8, 9) des Türrahmens (2) verlaufende, über die Umlenkrollen (10, 11) geführte obere Zugseil (6) ist das in dem mittleren horizontalen Abschnitt (12) des Türrahmens (2) verlaufende, über die Umlenkrolle (13) geführte untere Zugseil (7) im Punkt (14) angeschlagen. Das obere Zugseil (6) ist an dem in dem Zylinder (15) verschiebbaren Kolben (16) der als Antrieb für das Netz (3) dienenden Kolben-Zylinder-Einheit (17) befestigt. An die Überströmöffnung (18) des Zylinders (15) ist ein mit einem Festtreibstoffsatz (19) versehener Gasgenerator (20) angeschlossen. Über die mit dem nicht dargestellten Sensor verbundene Zündleitung (21) wird der Festtreibstoffsatz (19) gezündet. Durch das dann in den Zylinder (15) schlagartig einströmende Gas wird der Kolben (16) bis zu dem auf der Innenseite des Zylinders (15) angebrachten Anschlag (22) verschoben; gleichzeitig werden dabei gemäß Fig. 3 die Zugseile (6, 7) gespannt und das Netz (3) straff vor die Innenseite der Fensteröffnung (23) des Türrahmens (2) gespannt. Nach Erreichen der Endposition des Kolbens (16) wird das Zugseil (6) durch die am oberen Ende des Zylinders (15) angebrachten Klemmbacken (24) fixiert. Die im unteren Teil der Tür untergebrachte Gassack-Aufprall-Schutzeinheit (25) ist ebenfalls aktiviert und der Gassack (26) befindet sich in aufgeblasener Form, wie durch die gestrichelte Linie in Fig. 3 angedeutet, zwischen dem Seitenbereich des Fahrzeugs und dem Fahrzeuginsassen. Gemäß Fig. 4 ist der durch den Gasgenerator (27) aufgeblasene Gassack (26) mit dem Netz (3) vernäht.

Diese Kombinationen verhindern ein Austreten des Gassacks (26) durch die scheibenlose Fensteröffnung (23) der Tür (28), die mit dem Scharnier (29) am frontseitigen Holm (A-Holm) der Karosseriekonstruktion angeschlagen ist. An den Einschnürungen (30) ist die Innenhaut mit der Außenhaut des Gassacks (26) vernäht, so daß sie eine flache Form aufweist und dadurch ein kurzzeitiges Aufblasen des Gassacks erreicht wird.

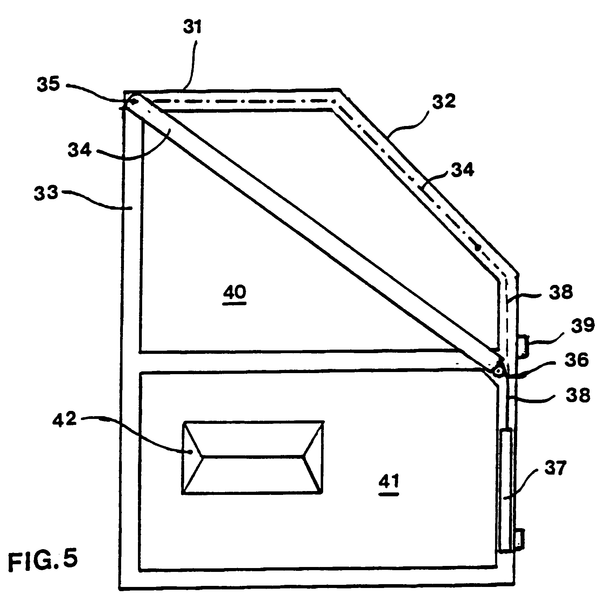

In Fig. 5 ist im dach- und frontseitigen Abschnitt (31, 32) des Türrahmens (33) ein bandförmiges, strichpunktiert dargestelltes Sicherheitselement (34) untergebracht und mit seinem einen Ende durch einen Anschlag (35) fest mit dem Türrahmen (33) verbunden. Das andere Ende des Sicherheitselements (34) ist an einem über eine Rolle (36) geführten und mit einer Kolben-Zylinder-Einheit (37) gekoppelten Zugseil (38) angeschlagen. Durch einen Festtreibstoff-Gasgenerator wird die Kolben-Zylinder-Einheit (37) betätigt und das bandförmige Sicherheitselement (34) diagonal von der oberen dem B-Holm der Karosseriekonstruktion benachbarten Ecke des Türrahmens (33) zu der unteren dem oberen Türscharnier (39) benachbarten Ecke der Fensteröffnung (40) vor diese gespannt. Im unteren Teil (41) der Tür ist eine Gassack-Aufprall-Schutzeinheit (42) angeordnet.

Zum Beispiel bewegt sich bei einem Seitenaufprall nach einer ersten Berührung des Fahrzeugs zum Zeitpunkt t = 0 ms der Kopf des Fahrzeuginsassen aufgrund seiner Massenträgheit zur Fahrzeugseite gegen die Stoßrichtung. Nach etwa 5 ms ist das Rückhaltemittel zusammen mit dem flächig an diesem anliegenden Gassack vor die Innenseite der Fensteröffnung gespannt. Danach beginnt der Gassack, sich aufzublasen, dessen Aufblaszeit 25 ms beträgt. Nach 30 ms schlägt der Kopf auf den nun voll aufgeblasenen Gassack auf. Ein Austreten des Gassacks durch die scheibenlose Fensteröffnung wird durch das Netz verhindert. Über Ausströmöffnungen läßt der Gassack das Gas definiert entweichen, so daß der Kopf weich und ohne große Rückprallkräfte aufgefangen wird.

## Patentansprüche

1. Sicherheitsvorrichtung zum Schutz der Insassen eines Fahrzeugs, vorzugsweise Personenkraftwagens, bei einem Seitenaufprall, bestehend aus einem im Seitenbereich des Fahrzeugs integrierten, bei einem Seitenaufprall mit Hilfe eines automatisch auslösbaren Antriebs (17, 37) mittels eines Zugmittels (6, 7, 38) fest vor die Innenseite der Fensteröffnung (23) des Seitenbereichs spannbaren Rückhaltemittel (3, 34), gekennzeichnet durch die Kombination mit einer im Seitenbereich des Fahrzeugs integrierten Gassack-Aufprall-Schutzeinheit (25, 42), deren Gassack (26) im aufgeblasenen Zustand zwischen dem vor die Fensteröffnung (23, 40) gespannten Rückhaltemittel (3, 34) und dem Fahrzeuginsassen liegt.

2. Sicherheitsvorrichtung nach Anspruch 1, dadurch gekennzeichnet, daß das Rückhaltemittel (3, 34) aus einem flächigen, im nichtaktivierten Zustand zusammengefalteten und verstauten Textilgut besteht.

3. Sicherheitsvorrichtung nach Anspruch 2, dadurch gekennzeichnet, daß das Rückhaltemittel (3, 34) ein Gewebe, Gestrick, Geflecht oder Netz ist.

4. Sicherheitsvorrichtung nach den Ansprüchen 1 bis 3, dadurch gekennzeichnet, daß das Zugmittel (6, 7, 38) geführt und nach Erreichen des aktivierten Zustands des Rückhaltemittels (3, 34) fixierbar ist.

5. Sicherheitsvorrichtung nach Anspruch 1, dadurch gekennzeichnet, daß der Antrieb (17, 37) aus einem vorgespannten Federelement besteht.

6. Sicherheitsvorrichtung nach Anspruch 1, dadurch gekennzeichnet, daß der Antrieb (17, 37) aus einer mit einem Fluid beaufschlagbaren Kolben-Zylinder-Einheit (15, 16) besteht.

7. Sicherheitsvorrichtung nach Anspruch 6, dadurch gekennzeichnet, daß die Kolben-Zylinder-Einheit (15, 16) mit einem Gasgenerator (20) verbunden ist.

8. Sicherheitsvorrichtung nach Anspruch 7, dadurch gekennzeichnet, daß der Gasgenerator (20) mit Druckluft gefüllt ist.

9. Sicherheitsvorrichtung nach Anspruch 7, dadurch gekennzeichnet, daß der Gasgenerator (20) mit einem durch Initialzündung zündbaren Festtreibstoffsatz (19) gefüllt ist.

10. Sicherheitsvorrichtung nach einem der Ansprüche 1 bis 9, dadurch gekennzeichnet, daß der Antrieb (17, 37), das Zugmittel (6, 7, 38) und das Rückhaltemittel (3, 34) im Türrahmen (2, 33) untergebracht sind.

11. Sicherheitsvorrichtung nach einem der Ansprüche 1 bis 9, dadurch gekennzeichnet, daß der Antrieb (17, 37), das Zugmittel (6, 7, 38) und/oder das Rückhaltemittel (3, 34) in den dem Türrahmen (2, 33) benachbarten Bereichen der Karosseriekonstruktion des Fahrzeugs untergebracht sind.

12. Sicherheitsvorrichtung nach einem der Ansprüche 1 bis 11, dadurch gekennzeichnet, daß der Gassack (26) der Gassack-Aufprall-Schutzeinheit (25, 42) und das Rückhaltemittel (3, 34) bzw. Zugmittel (6, 7, 38) fest miteinander verbunden sind.

13. Sicherheitsvorrichtung nach einem der Ansprüche 1 bis 12, dadurch gekennzeichnet, daß die Gassack-Aufprall-Schutzeinheit (25, 42) in der Tür untergebracht ist.

14. Sicherheitsvorrichtung nach einem der Ansprüche 1 bis 13, dadurch gekennzeichnet, daß die Gassack-Aufprall-Schutzeinheit (25, 42) in den Bereichen des Bodenholms, des Dachholms, der Türholme, insbesondere des mittleren Holms, oder in dem dem Dachholm benachbarten Bereich des Dachs der Karosseriekonstruktion des Fahrzeugs untergebracht ist.

## Claims

1. A safety device for protecting the occupants of a vehicle, preferably passenger vehicle, in the event of a side-on collision, consisting of a restraining means (3, 34), integrated in the side region of the vehicle which in the event of a side-on collision can be clamped securely in front of the inside of the window opening (23) of the side region with the aid of an automatically triggered drive means (17, 37) by means of a traction mechanism (6, 7, 38), characterised by the combination with an airbag impact protection unit (25, 42) integrated in the side region of the vehicle, the airbag (26) of which unit, in the inflated state, lies between the restraining means (3, 34) clamped in front of the window opening (23, 40) and the occupants of the vehicle.

2. A safety device according to Claim 1, characterised in that the restraining means (3, 34) consists of a flat textile material which is folded up and stowed in the non-activated state.

3. A safety device according to Claim 2, characterised in that the restraining means (3, 34) is a woven fabric, knitted fabric, plaited fabric or net.

4. A safety device according to Claims 1 to 3, characterised in that the traction mechanism (6, 7, 38) is guided and can be fixed once the activated state of the restraining means (3, 34) has been achieved.

5. A safety device according to Claim 1, characterised in that the drive means (17, 37) consists of a biassed spring element.

6. A safety device according to Claim 1, characterised in that the drive means (17, 37) consists of a piston-cylinder unit (15, 16) which can be supplied with a fluid.

7. A safety device according to Claim 6, characterised in that the piston-cylinder unit (15, 16) is connected to a gas generator (20).

8. A safety device according to Claim 7, characterised in that the gas generator (20) is filled with compressed air.

9. A safety device according to Claim 7, characterised in that the gas generator (20) is filled with a solid explosive charge (19) which can be ignited by priming.

10. A safety device according to one of Claims 1 to 9, characterised in that the drive means (17, 37), the traction mechanism (6, 7, 38) and the restraining means <(3, 34) are housed in the door frame (2, 33).

11. A safety device according to one of Claims 1 to 9, characterised in that the drive means (17, 37), the traction mechanism (6, 7, 38) and/or the restraining means (3, 34) are housed in the regions of the car body structure of the vehicle adjacent to the door frame (2, 33).

12. A safety device according to one of Claims 1 to 11, characterised in that the airbag (26) of the airbag impact protection unit (25, 42) and the restraining means (3, 34) or traction mechanism (6, 7, 38) are securely fastened together.

13. A safety device according to one of Claims 1 to 12, characterised in that the airbag impact protection unit (25, 42) is housed in the door.

14. A safety device according to one of Claims 1 to 13, characterised in that the airbag impact protection unit (25, 42) is housed in the regions of the floor spar, the roof spar, the door spars, in particular the central spar, or in the region of the roof of the car body structure of the vehicle adjacent to the roof spar.

## Revendications

1. Dispositif de sécurité destiné à protéger les passagers assis d'un véhicule, notamment d'une voiture de tourisme, dans le cas d'un choc latéral, constitué d'un moyen de retenue (3,34), qui est intégré dans la partie latérale du véhicule et peut être tendu fermement devant le côté intérieur de l'ouverture de fenêtre (23) de la partie latérale, à l'aide d'un dispositif d'entraînement (17,37) pouvant être déclenché automatiquement, par un moyen de traction (6,7,38), caractérisé par la combinaison d'une unité à sac à gaz de protection contre un choc (25,42), qui est intégrée dans la partie latérale du véhicule et dont le sac à gaz (26) est situé, à l'état gonflé, entre le moyen de retenue (3,34), qui est tendu devant l'ouverture de fenêtre (23,40), et le passager du véhicule.

2. Dispositif de sécurité suivant la revendication 1, caractérisé par le fait que le moyen de retenue (3,34) est en une matière textile plane, repliée sur soi-même à l'état non activé et arrimée.

3. Dispositif de sécurité suivant la revendication 2, caractérisé par le fait que le moyen de retenue (3,34) est tissé, tricoté, tressé ou un filet.

4. Dispositif de sécurité suivant les revendications 1 à 3, caractérisé par le fait que le moyen de traction (6,7,38) est guidé et peut être immobilisé une fois qu'est atteint l'état activé du moyen de retenue (3,34).

5. Dispositif de sécurité suivant la revendication 1, caractérisé par le fait que le dispositif d'entraînement (17,37) est constitué d'un élément élastique précontraint.

6. Dispositif de sécurité suivant la revendication 1, caractérisé par le fait que le dispositif d'entraînement (17,37) est constitué d'une unité à piston et cylindre (15, 16), qui peut être alimentée par un fluide.

7. Dispositif de sécurité suivant la revendication 6, caractérisé par le fait que l'unité à piston et cylindre (15,16) communique avec le générateur de gaz (20).

8. Dispositif de sécurité suivant la revendication 7, caractérisé par le fait que le générateur de gaz (20) est empli d'air comprimé.

9. Dispositif de sécurité suivant la revendication 7, caractérisé par le fait que le générateur de gaz (20) est empli d'un agent gonflant solide (19), qui peut être amorcé au moyen d'un amorçage initial.

10. Dispositif de sécurité suivant l'une des revendications 1 à 9, caractérisé par le fait que le dispositif d'entraînement (17,37), le moyen de traction (6,7, 38) et le moyen de retenue (3,34) sont logés dans le cadre (2,33) de la portière.

11. Dispositif de sécurité suivant l'une des revendications 1 à 9, caractérisé par le fait que le dispositif d'entraînement (17,37), le moyen de traction (6,7, 38) et/ou le moyen de retenue (3,34) sont logés dans les parties, qui sont voisines du cadre (2,33) de la portière, de la structure de la carrosserie du véhicule.

12. Dispositif de sécurité suivant l'une des revendications 1 à 11, caractérisé par le fait que le sac à gaz (26) de l'unité à sac à gaz de protection contre un choc (25,42) et le moyen de retenue (3,34) ou le moyen de traction (6,7,38) sont reliés de façon fixe entre eux.

13. Dispositif de sécurité suivant l'une des revendications 1 à 12, caractérisé par le fait que l'unité à sac à gaz de protection contre un choc (25,42) est logée dans la portière.

14. Dispositif de sécurité suivant l'une des revendications 1 à 13, caractérisé par le fait que l'unité à sac à gaz de protection contre un choc (25,42) est logée dans les parties de la traverse de plancher, de la traverse de toit, des montants de portière, notamment du montant médian, ou dans la partie, voisine de la traverse de toit, du toit de la structure de la carrosserie du véhicule.
